# EUROPEAN PATENT APPLICATION

(11) **EP 2 368 775 A2**
(43) Date of publication of application: **28.09.2011**
(21) Application number: 10015268.5
(22) Date of filing: 03.12.2010
(51) Int. Cl.: B60S 1/38

(54) **A structure and method of manufacturing a unitary double-blade wind shield wiper**

(30) Priority: 15.03.2010 TW 99107431
(71) Applicant: Huang, Chunting, Tu-Ku-Cheng, Yunlin Hsien, Taiwan 63354 (CN)
(72) Inventor: Huang, Chunting, Tu-Ku-Cheng, Yunlin Hsien, Taiwan 63354 (CN)
(74) Representative: Wagner, Bernhard Peter

(57) **Abstract**

The present invention relates a structure and method of manufacturing a unitary double-blade wind shield wiper (1). The method comprises a thermal forming step, a cutting step, a folding step and preferably a bonding step. In the thermal forming step, a rubber plate is imprinted into a rubber product (2) which contains a plurality of continually connected wind shield wipers with a plurality of folding guide grooves (14). In the cutting step, the rubber product is divided into a plurality of independent wind shield wipers, wherein each of the independent wind shield wipers has a pair of blades (6,7) extending in opposite directions to each other. In the folding step, each of the independent wind shield wipers is folded along the folding guide groove (14) thereby to make the pair of blades (6,7) parallel to each other. Preferable, further to impose the bonding step to fix the independent wind shield wipers into a permanent configuration, so as to be a more durable unitary double-blade wind shield wiper.

## Description

### BACKGROUND OF THE INVENTION

### FIELD OF THE INVENTION

The present invention relates to a structure and method of manufacturing a unitary double-blade wind shield wiper, and more particularly relates to a unitary windshield wiper formed by thermal forming process, cutting process, folding process and bonding process, to form a pair of blades paralleled to each other.

### DESCRIPTION OF THE RELATED ART

Windshields of vehicles are typically cleaned using a wiper assembly mounted to a driven wiper arm or driving arm which is mounted for oscillating pivotal movement to effect a back-and-forth wiping motion of the wiper assembly across the windshield. The wiper assembly typically includes a blade arm or blade arm assembly to which a rubber wiper blade is secured. Wiper blades made of rubber have proven to be especially well suited for cleaning unwanted water from a windshield.

It is well known in the art to provide two or more parallel wiper blades on a single wiper arm to increase the efficiency of the wiping action, as shown by the following patents.

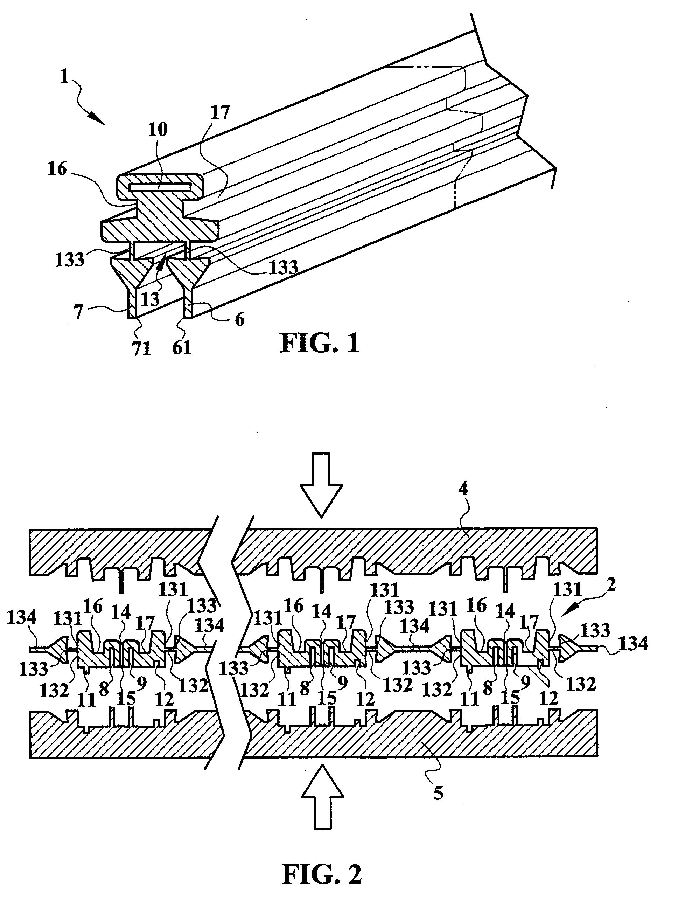

U.S. Pat. No. 5,168,595, issued to James L. Naylor, Jr. on Dec. 8, 1992 and entitled "Windshield Wiper Blade and Assembly", discloses one such system. A single wiper arm assembly 20 (shown in FIGS. 1 through 7) has an elongated blade carrier assembly 36 pivotally mounted to the arm 24, and first and second blades 26 and 27 mounted on the blade assembly 36.

U.S. Pat. No. 4,745,653, issued to Bedrich V. Bliznak on May 24, 1988 and entitled "Wiper/Scraper/Washer Blade for Windows on Transportation Means", discloses a multiple edged blade 1 (shown in FIG. 1) having two blades of different cross sections in contact with the surface to be cleaned, the smooth blades having a serrated appearance in cross-sectional view.

U.S. Pat. No. 4,567,621, issued to Robert L. Alley, Jr. on Feb. 4, 1986 and entitled "Composite Windshield Wiper Assembly", discloses a wiper blade assembly A (shown in FIG. 1) having a pair of spaced wiper blade elements 42, 44 having thin resilient wiping edges 42a, 44a. A scrubbing block 50 occupies the entire space between the wiping blade elements and protrudes at 52 past the wiping edges 42a, 44a.

U.S. Pat. No. 4,339,839, issued to Robert E. Knights on Jul. 20, 1982 and entitled "Windscreen Wipers", discloses (see FIG. 1) a windscreen wiper having a pair of spaced parallel wiping lips 22 bounding a longitudinal recess 28 in which is a bristle 32.

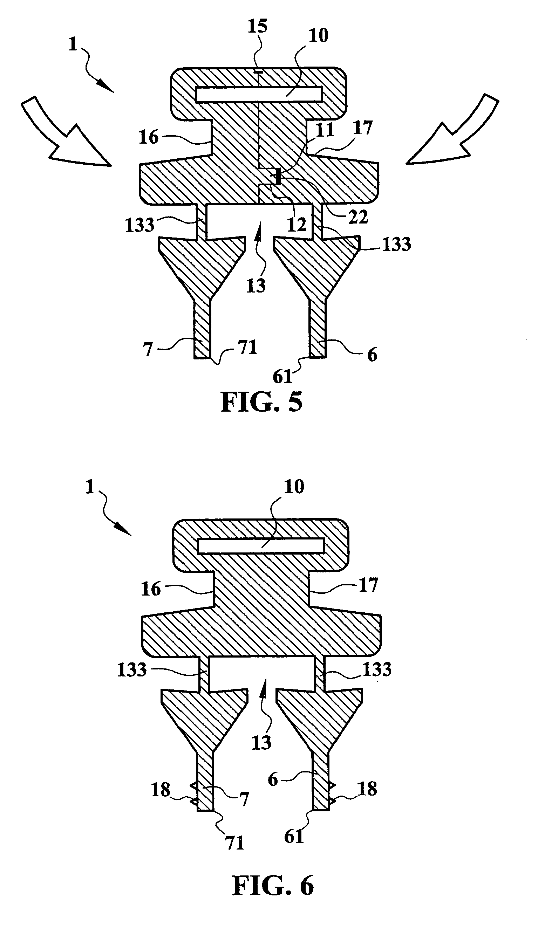

U.S. Pat. No. 3,916,473, issued to Zelmer L. Williams on Nov. 4, 1975 and entitled "Wiper for Windshields", discloses (see FIG. 6) a single longitudinal blade 38 provided with a longitudinal groove 40 running substantially the length of the blade 38. An aperture 42 in the blade base 36 permits feed of a fluid, such as windshield washer fluid to the groove 40, from whence it flows to the windshield via passages 72 which run from the base of the blade 36 to the windshield.

A wiper blade having a double-blade structure provides more effective wiping because a first blade located forward in the wiping direction serves to execute a preprocess, whereas a second blade located rearward in the same direction serves to perform actual wiping.

Although the above mentioned related arts provides variant structures of double-blade structure, there are difficulties and heavy cost for manufacturing the elements and assembling all together. The related arts didn't teach us a method to manufacture the same on large scale so as to lower the manufacturing and assembling cost.

### SUMMARY OF THE INVENTION

To achieve its intended purposes, objects and advantages over the prior art, the present invention provides a structure and method of manufacturing a unitary double-blade wind shield wiper.

According to the present invention, a preferred method of manufacturing the unitary double-blade wind shield wiper may include: a thermal forming step, a cutting step, a folding step and/or a bonding step. In the thermal forming step, a pair of thermal forming mold halves is used to imprint a rubber plate into a rubber product containing a plurality of continually connected wind shield wipers with a plurality of folding guide grooves. In the cutting step, the rubber product is divided into a plurality of independent wind shield wipers, wherein each of the independent wind shield wipers has a pair of blades extending in opposite directions to each other. In the folding step, each of the independent wind shield wipers is folded along the folding guide groove thereby to make the pair of blades parallel to each other. In the bonding step, each of the independent wind shield wipers is fixed into a permanent configuration of unitary windshield wiper with double blade.

According to the present invention, a preferred embodiment of the unitary double-blade wind shield wiper may be a rubber body integrally formed with: a first blade, a second blade, a passageway for holding an elastic bending plate therein, and a pair of outer groove for connecting with a wiper holder, wherein the first blade is paralleled to the second blade, and preferably a plurality of protruded points is formed on the opposite side surfaces of the pair of blades.

The present invention can be best understood through the following description and accompanying drawing, wherein:

### BRIEF DESCRIPTION OF THE DRAWINGS

FIG. 1 is a perspective view showing an embodiment of the unitary double-blade wind shield wiper according to the present invention.

FIG. 2 is a side cross-sectional view showing the thermal forming step of the method according to the present invention.

FIG. 3 is a side cross-sectional view showing the cutting step of the method according to the present invention.

FIG. 4 is a side cross-sectional view showing the folding step of the method according to the present invention.

FIG. 5 is a side cross-sectional view showing the bonding step of the method according to the present invention.

FIG. 6 is a side cross-sectional view showing an alternative embodiment of the double blades with a plurality of protruded points.

FIG. 7 is a side cross-sectional view illustrating the operation of the double blades with protruded points when they are moving in one direction.

FIG. 8 is a side cross-sectional view illustrating the operation of the double blades with protruded points when they are moving in another direction.

### DETAILED DESCRIPTION OF THE PREFERRED EMBODIMENTS

Referring to the drawings, wherein like numerals indicate like elements, there is shown in FIG. 1 an embodiment of the unitary double-blade wind shield wiper 1 can be a rubber body integrally thermal formed and folded to be with: a first blade 6, a second blade 7, a passageway 10 for holding an elastic bending plate 20 therein, and a pair of outer side grooves 16 and 17 for connecting with a wiper holder 21, wherein the first blade 6 is paralleled to the second blade 7.

Referring to FIG. 6, an alternative embodiment of the first blade 6 and second blade 7 includes a plurality of protruded points 18 formed on the opposite side surfaces of the pair of blades 6 and 7. Preferably, the protruded points 18 may be formed in conic shape or pyramidal.

Each of the blades 6 and 7 may be formed with a necked portion 133 both are spaced apart by a swinging space 13 that allows the both to swing back and forth while in operation.

According to the present invention, the preferred method of manufacturing the unitary double-blade wind shield wiper 1 may include: a thermal forming step, a cutting step, a folding step and bonding step.

Referring to FIG. 2, the thermal forming step uses a pair of thermal forming mold halves 4 and 5 to imprint a rubber plate into a rubber product 2 containing a plurality of continually connected wind shield wipers 2 with a plurality of folding guide grooves 14 and a plurality of unitarily connected portions 15. Symmetrically formed on each side area of the folding guide grooves 14 or unitarily connected portions 15, the rubber product 2 is imprinted to have a first groove 8 and second groove 9, a pair of upper side grooves 131, a pair of down side grooves 132, a pair of necked portions 333, a pair of outer side grooves 16 and 17, a pair of flattened connecting portions 134, and a positioning rib or protruded portion 11 and a positioning recess or groove 12.

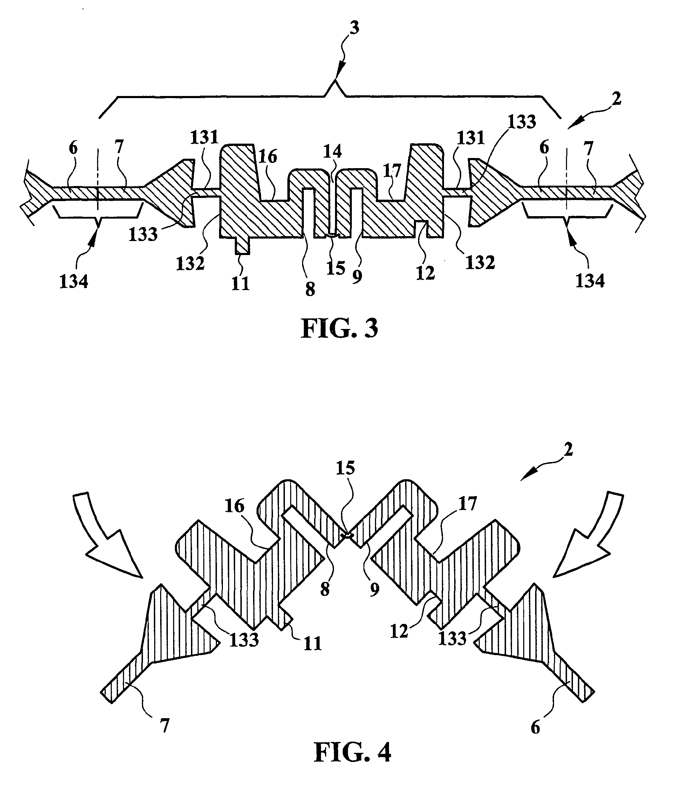

Referring to FIG. 3, the cutting step divides the rubber product 2 into a plurality of independent wind shield wipers 3. A cutting tool is imposed to cut the flattened connecting portion 134 perpendicularly to form a pair of blades 6 and 7 on each independent wind shield wipers 3. By the perpendicular cutting, each of the blades 6 and 7 is provided with sharp edges and extended in opposite directions to each other.

Referring to FIG. 4, in the folding step, each of the independent wind shield wipers 3 is folded along the folding guide groove 14 thereby to make the pair of blades 6 and 7 parallel to each other. Preferably, the folding is completed by matching and engaging the positioning rib or protruded portion 11 to the positioning recess or groove 12, so as to align the ends of the pair of blades 6 and 7 on a same plane, automatically.

Referring to FIG. 5, while the folding step is completed, the first groove 8 and second groove 9 is met together to form a passageway 10 for holding an elastic bending plate 20, and a swinging space 13 is then formed between the downside grooves 132 or the necked portions 133.

Referring to FIGS. 5 and 7 or 8, when the folding step is completed, the pair of outer side grooves are exposed on the symmetrical sides of the unitary double-blade wind shield wiper 1 for connecting with a wiper holder.

The bonding step can be omitted or combined with the folding step, if the positioning rib or protruded portion 11 is formed with a hook like shape to permanently connected within the positioning recess or groove 12.

Referring again to FIG. 5, a preferable bonding step may include to fix each of the independent wind shield wipers 3 into a permanent configuration by gluing adhesive material 22 so as to produce a more durable unitary double-blade wind shield wiper 1 of the present invention.

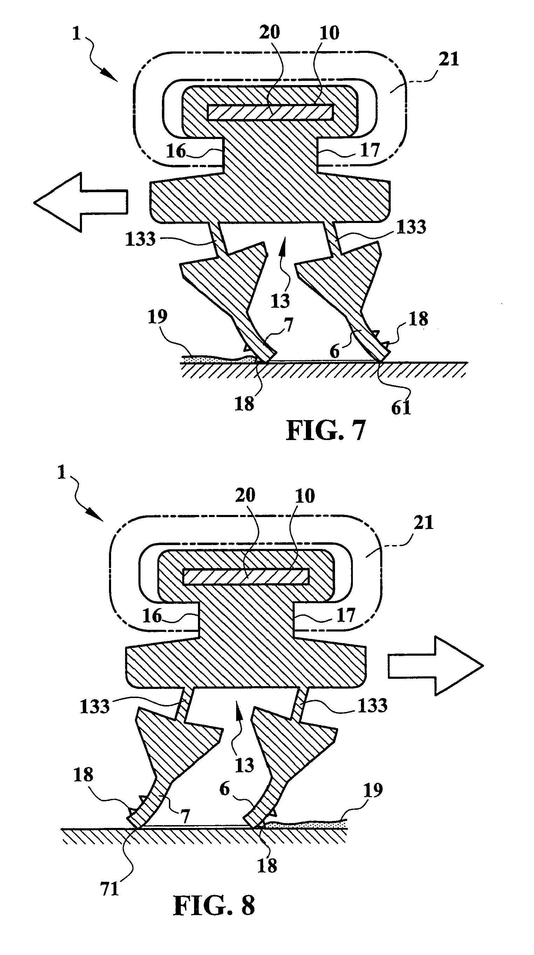

As the operation illustrated in FIG. 7, the unitary double-blade wind shield wiper 1 is working in a first direction, while the plurality of protruded points 18 formed on the outside of second blade 7 may break a possible existed unclean film 19 if it being stuck on the worked wind shield, and thus make the unclean film 19 to be easily cleaned up by the inner edge 61 of the first blade 6.

As the operation illustrated in FIG. 8, the unitary double-blade wind shield wiper 1 is working in opposite direction, while the plurality of protruded points 18 formed on the outside of first blade 6 may break a possible existed unclean film 19 if it being stuck on the worked wind shield, and thus make the unclean film 19 to be easily cleaned up by the inner edge 71 of the second blade 7.

As mentioned above, it is clearly that the unitary double-blade wind shield wiper 1 of this embodiment can easily clean up the rain water, and particularly can break and clean up the possible existed unclean film from the wind shield more efficiently than ever.

All of the U.S. Patents mentioned in the Background of the Invention are hereby incorporated by reference.

This invention has been described in detail with respect to the preferred embodiments. These embodiments, however, are merely for example only and this invention is not intended to be restricted thereto. It will be easily understood by those skilled in the art that variations and modifications can be easily made within the scope of the invention, as defined by the appended claims.

## Claims

1. A method of manufacturing a unitary double-blade wind shield wiper, comprising:
a thermal forming step, for imprinting a rubber plate by thermal forming mold halves into a rubber product containing a plurality of continually connected wind shield wipers with a plurality of folding guide grooves, a plurality of unitarily connected portions and a plurality of flattened connecting portions;
a cutting step, for cutting the rubber product perpendicularly to produce a plurality of independent wind shield wipers, and form a pair of blades on each of the independent wind shield wipers, wherein each of the blades is provided with sharp edges and extended in opposite directions to each other; and
a folding step, for folding the independent wind shield wipers along the folding guide groove to make the pair of blades parallel to each other.

2. The method of manufacturing a unitary double-blade wind shield wiper in accordance with claim 1, further includes a bonding step for fixing the folded independent wind shield wipers into a permanent configuration, so as to keep the pair of blades parallel to each other.

3. The method of manufacturing a unitary double-blade wind shield wiper in accordance with claim 1, wherein the rubber product is imprinted by the thermal forming step with a first groove and second groove, symmetrically on each side area of the folding guide grooves, and while the folding step is completed, the first groove and second groove is met together to form a passageway for holding an elastic bending plate.

4. The method of manufacturing a unitary double-blade wind shield wiper in accordance with claim 1, wherein the rubber product is imprinted by the thermal forming step with a positioning rib and a positioning groove, symmetrically on each side area of the folding guide grooves, and while the folding step is completed, the positioning rib is matched and engaged with the positioning groove, so as to align the ends of the pair of blades and on a same plane, automatically.

5. The method of manufacturing a unitary double-blade wind shield wiper in accordance with claim 1, wherein the rubber product is imprinted by the thermal forming step with a pair of outer side grooves, and while the folding step is completed, the pair of outer side grooves are exposed on the symmetrical sides of the unitary windshield wiper with double blade for connecting with a wiper holder.

6. The method of manufacturing a unitary double-blade wind shield wiper in accordance with claim 1, wherein the rubber product is imprinted by the thermal forming step with a pair of upper side groove, a pair of down side groove and a pair of necked portion, and while the folding step is completed, a swinging space is formed between the pair of necked portion that allows the pair of edges to swing back and forth.

7. A unitary double-blade wind shield wiper, comprising a rubber body integrally thermal formed and folded to be with:
a first blade;
a second blade, paralleled to the second blade;
a passageway, for holding an elastic bending plate therein; and
a pair of outer side grooves for connecting with a wiper holder.

8. The unitary double-blade wind shield wiper in accordance with claim 7, wherein the first blade and second blades are formed with a plurality of protruded points the opposite side surfaces thereof.

9. The unitary double-blade wind shield wiper in accordance with claim 8, wherein each of the plurality of protruded points is formed in conic shape.

10. The unitary double-blade wind shield wiper in accordance with claim 8, wherein each of the plurality of protruded points is formed in pyramidal shape.
